**Europäisches Patentamt**

**European Patent Office**

**Office européen des brevets**

(11) Veröffentlichungsnummer: **0 011 732**
**B1**

(12) **EUROPÄISCHE PATENTSCHRIFT**

(45) Veröffentlichungstag der Patentschrift:
**16.09.81**

(21) Anmeldenummer: **79104330.0**

(22) Anmeldetag: **06.11.79**

(51) Int. Cl.³: **A 01 B 29/04**

(54) **Bodenbearbeitungsgerät.**

(30) Priorität: **17.11.78 DE 2849891**

(43) Veröffentlichungstag der Anmeldung:
**11.06.80 Patentblatt 80/12**

(45) Bekanntmachung des Hinweises auf die Patenterteilung:
**16.09.81 Patentblatt 81/37**

(84) Benannte Vertragsstaaten:
**AT BE CH FR GB IT NL SE**

(56) Entgegenhaltungen:
**DE-A-2 042 885**
**DE-A-2 112 309**
**DE-A1-2 753 083**
**US-A-2 131 324**
**US-A-2 700 856**

(73) Patentinhaber: **ACCORD Landmaschinen Heinrich Weiste & Co. GmbH, Coesterweg 42, D-4770 Soest (DE)**

(72) Erfinder: **Weiste, Helmut, Ing. grad., Auf der Breite 22, D-4772 Bad-Sassendorf (DE)**

(74) Vertreter: **Habbel, Hans-Georg, Dipl.-Ing., Postfach 3429 Am Kanonengraben 11, D-4400 Münster (DE)**

Bodenbearbeitungsgerät

Die Erfindung bezieht sich auf ein Bodenbearbeitungsgerät mit einem von einem Tragrahmen drehbar getragenen Arbeitswerkzeug, das an seinem Umfang nach aussen gerichtete und mit ihrer Mittelachse gegenüber einem Radialstrahl quer zur Umlaufachse in Drehrichtung des Arbeitswerkzeuges geneigte, zahnartige Ansätze aufweist (DE-AS 21 12 309).

Bodenbearbeitungsgeräte zur Saatbettbearbeitung sind beispielsweise in der DT-OS 27 53 083 beschrieben, wobei dieses Gerät im wesentlichen aus einem Krümler besteht, der mit umlaufenden Krümelwalzen ausgerüstet ist. Hinter diese Krümelwalzen ist eine Walze geschaltet, die an ihrer Umfangsfläche mit über den Umfang vorstehenden Ansätzen ausgerüstet ist. Die Ansätze sind dabei in Fahrtrichtung des Arbeitswerkzeuges gesehen nach hinten geneigt, d.h. also ausgehend von einem Radialstrahl sind diese Ansätze in Drehrichtung des Arbeitswerkzeuges gesehen nach hinten geneigt, so dass sie auf diese Weise relativ grossflächig mit dem Boden in Berührung kommen, wenn sich das Arbeitswerkzeug dreht. Die bekannte Kombination hat die Aufgabe, ein Saatbett zu erstellen, wobei aber aufgrund der Verwendung der Walze und der Ausbildung der an dieser Walze angeordneten Arbeitswerkzeuge zur Erstellung eines den Ansprüchen gerechtwerdenden Saatbettes, insbesondere in schwierigen Böden, erhebliche Kombinationen von Arbeitswerkzeugen erforderlich sind, die als sogenannte Saatbettkombinationen bezeichnet werden und im wesentlichen aus drei Werkzeugen bestehen, nämlich einer Egge oder einem Feingrubber kombiniert mit Wälzeggen, sogenannten Krümlern oder auch Packerwalzen.

Die Krümler haben auf leichten Böden den Nachteil, dass sie nicht genügend Bodenschluss herstellen, d.h. sie packen nicht, es sei denn, man schaltet alle drei genannten Bearbeitungswerkzeuge hintereinander in Mehrfach-Kombinationen. Das ergibt jedoch lange und daher nicht aushebbare Geräte, die mit den üblichen Traktoren kaum zu handhaben sind.

Auf schweren Böden rollen die Krümler nur über die Kluten hinweg, ohne diese im wesentlichen zu zerkleinern. Der Packer allein schafft keine genügend krümelige Erdschicht an der Oberfläche, so dass das Saatbett nicht den Erfordernissen der Praxis entspricht.

In der US-PS 21 31 324 wird eine im wesentlichen geschlossene, trommelförmige Walze beschrieben, bei der nicht der angestrebte Bodendruck im Bereich jeder einzelnen Berührungsstelle mit dem Boden erreicht wird.

In der im Jahr 1955 veröffentlichten US-PS 27 00 856 wird ein Arbeitswerkzeug beschrieben, das aus einem Stahlstrang besteht, der wendelförmig geformt ist. Dieser 1951 gemachte Vorschlag hat nicht dazu geführt, die landwirtschaftliche Fachwelt irgendwie zu veranlassen, eine neue Kombination auszuprobieren oder einzusetzen, die aus dem wendelförmigen Stahlstrang einerseits und den bekannten zahnartigen Ansätzen andererseits besteht.

Der Erfindung liegt die Aufgabe zugrunde, ein Bearbeitungswerkzeug zu schaffen, das nach dem Pflügen auch auf klutigem Boden eine gute Packerwirkung besitzt und dabei gleichzeitig eine fein gekrümelte Oberflächenschicht hinterlässt, so dass dadurch ein Saatbett erstellt wird.

Diese der Erfindung zugrundeliegende Aufgabe wird durch die in den Ansprüchen gekennzeichneten Massnahmen gelöst, insbesondere dadurch, dass ein Arbeitswerkzeug geschaffen wird, das aus einer aus einem Stahlstrang geformten Wendel besteht, die an ihrer Aussenseite die Ansätze trägt, wobei die Wendelgänge im Abstand voneinander liegen.

Die Erfindung geht dabei von der Überlegung aus, dass mit einem solchen Arbeitswerkzeug eine Packerwirkung und damit der gewünschte Bodenschluss herbeigeführt werden kann, dass andererseits aber die an der Oberfläche des Arbeitswerkzeuges angeordneten Ansätze die erforderliche Krümelschicht schaffen, die bisher mit den bekannten Werkzeugen, beispielsweise auf tonigen und klutigen Böden, nur durch Hintereinanderschalten mehrerer Arbeitswerkzeuge oder durch mehrmaliges Beackern möglich war, wobei durch mehrmaliges Befahren des Feldes natürlich eine unerwünschte Bodenverdichtung im Bereich der Fahrspuren auftrat.

Die Wirkung des erfindungsgemässen Gerätes ist doppelt so gross wie die eines normalen Eggenfeldes und das bei nur halber Baulänge. Bei schwierigen Böden lässt sich durch Hintereinanderschalten von zwei erfindungsgemässen Geräten der Effekt noch mehr als verdoppeln, da ein Teil des nach hinten hochgeschleuderten Erdstromes gegen die oberen sich nach vorne drehenden Zinken des zweiten Arbeitsgerätes geschleudert werden und dadurch erneut zerkleinert werden. Die über die Oberfläche des Arbeitswerkzeuges vorstehenden Ansätze, die im nachfolgenden als Dorne bezeichnet werden, erfüllen drei Funktionen:

a) Beim Abrollen auf dem Boden zerdrücken sie die Kluten und zersprengen dadurch den Boden,

b) beim Herausrollen aus dem Boden reissen sie Kluten und bereits zerkleinerte Erde hoch und zerkleinern beides und mischen beides noch einmal,

c) durch das Hochschleudern von Kluten, wobei die Schleuderwirkung in Abhängigkeit der Fahrgeschwindigkeit reguliert werden kann, wird erreicht, dass gröbere Brocken, die noch nicht zerstört sind, gegen die sich drehenden Zinken geschleudert werden, so dass ein hoher Zertrümmerungseffekt erreichbar ist,

d) der Wendelstrang wirkt dabei gleichzeitig als Packer und schafft dabei eine Unterschicht mit guter Kapillarwirkung,

e) die Ansätze verstärken diese Packerwirkung.

Vorzugsweise wird als Wendelstrang ein Dreikantstab gewählt, der mit seinem Scheitel die zertrümmernde Wirkung auf die Kluten erhöht und in besonders günstiger Weise eine Packerwirkung erzielt.

Schliesslich bezieht sich die Erfindung auf eine Kombination zwischen einer an sich bekannten Egge, die mit dem erfindungsgemässen Arbeitswerkzeug kombiniert ist, wodurch ausgezeichnete Erfolge erzielt werden konnten.

Ein Ausführungsbeispiel der Erfindung wird nachfolgend anhand der Zeichnungen erläutert. Die Zeichnungen zeigen dabei in

Fig. 1 eine schaubildliche Ansicht auf einen Teil des Arbeitswerkzeuges gemäss der Erfindung, in

Fig. 2 einen Schnitt gemäss der Linie 2–2 in Fig. 1 und in

Fig. 3 in wesentlich grösserem Masstab die Anordnung des Ansatzes an der Wendel des Arbeitswerkzeuges.

In der Zeichnung ist mit 1 allgemein ein Arbeitswerkzeug bezeichnet, das aus einer Tragachse 2 besteht, die bei 3 eine entsprechende Lagerung aufweist, so dass dieses Gerät in einem Rahmen, der aus Übersichtlichkeitsgründen in der Zeichnung nicht dargestellt ist, eingesetzt und gehaltert werden kann. Das eigentliche Arbeitsgerät besteht dabei aus einem in der Zeichnung als Vierkantstahl dargestellten Materialstrang 4, der zu einer Wendel gebogen ist, die allgemein mit 5 bezeichnet ist. Diese Wendel umgibt die Welle 2 in gleichmässigem Abstand und trägt an ihrer Oberseite Ansätze 6, die bei dem dargestellten Ausführungsbeispiel als spitz nach aussen hin zulaufende Dorne 7 ausgebildet sind. Die Halterung des Wendelstranges kann durch in die Wendel eingebaute und mit der Welle 2 in Verbindung stehende Tragstreben 8 erreicht werden.

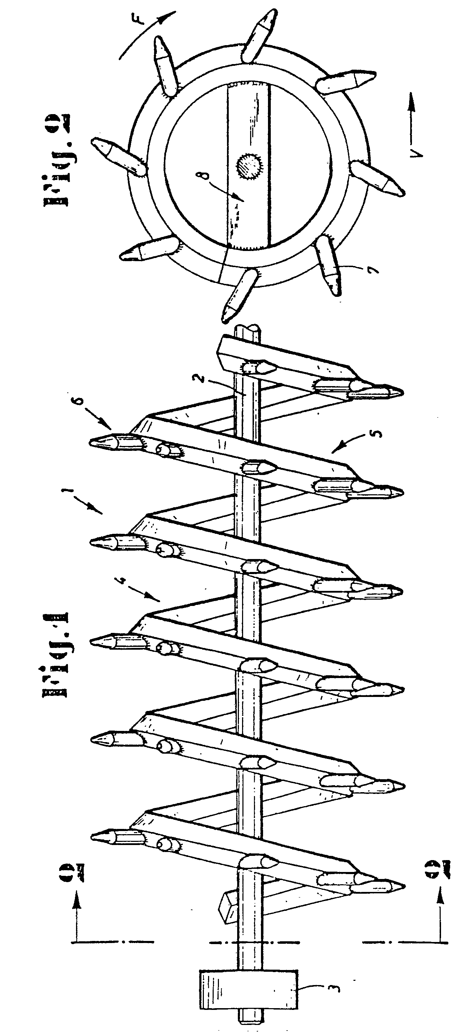

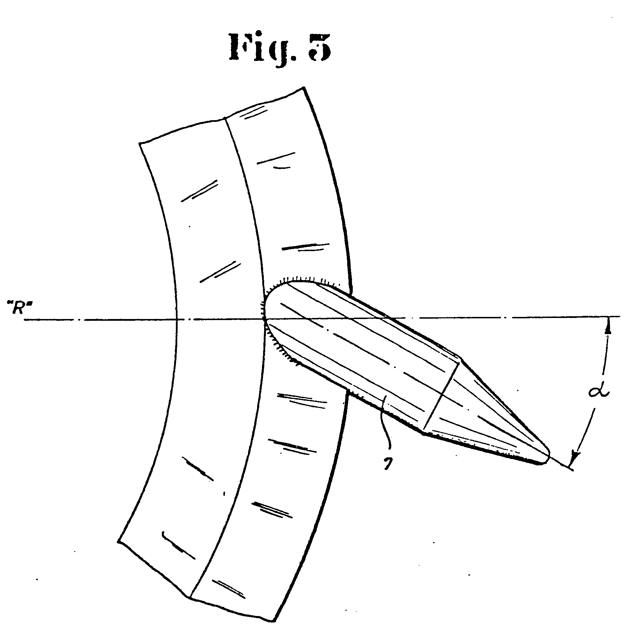

Aus Fig. 3 ist deutlich erkennbar, dass der Dorn 7 gegenüber dem in Fig. 3 mit «R» bezeichneten Radialstrahl geneigt ist, und zwar um einen Winkel $\alpha$ von etwa 30°, und zwar in Drehrichtung des Arbeitswerkzeuges, wobei die Drehrichtung des Arbeitswerkzeuges in Fig. 2 mit dem Pfeil F und die Vorschubrichtung des gesamten Arbeitswerkzeuges in Fig. 2 mit dem Pfeil V bezeichnet ist.

Bei dem dargestellten Ausführungsbeispiel sind die Dorne 7 an einer Flachseite des Vierkantstahles angeschweisst, jedoch ist es selbstverständlich auch möglich, die Dorne mittig auf den Scheitel des Vierkantstahles zu schweissen.

Der Vierkantstahl bietet sich als handelsübliches Profil zur Herstellung der Wendel an, jedoch ist es selbstverständlich auch möglich, einen Dreikantstab einzusetzen oder anstelle von Stahl einen anderen Werkstoff, der die entsprechende Festigkeit und die angestrebten guten Verschleisseigenschaften kombiniert mit dem entsprechenden Gewicht aufweist.

Das Gewicht kann zusätzlich, wie in der Landwirtschaft an sich bekannt, durch aufgelegte Gewichtsblöcke auf das Arbeitsgerät verändert bzw. erhöht werden.

Die Dorne 7 sind im Querschnitt rund dargestellt, können aber selbstverständlich auch eine andere Form aufweisen, insbesondere können sie auch stromlinienförmig oder flach gestaltet sein, um damit entweder den Auswurfeffekt zu erhöhen oder zu verringern.

**Patentansprüche**

1. Bodenbearbeitunsgerät mit einem von einem Tragrahmen drehbar getragenen Arbeitswerkzeug (1), das an seinem Umfang nach aussen gerichtete und mit ihrer Mittelachse gegenüber einem Radialstrahl (R) quer zur Umlaufachse in Drehrichtung des Arbeitswerkzeuges (1) geneigte, zahnartige Ansätze (6) aufweist, gekennzeichnet durch eine das Arbeitswerkzeug bildende, aus einem Stahlstrang (4) geformte Wendel (5), die an ihrer Aussenseite die Ansätze (6) trägt, wobei die Wendelgänge im Abstand voneinander liegen.

2. Bodenbearbeitungsgerät nach Anspruch 1, dadurch gekennzeichnet, dass die Wendel (5) aus einem Vierkantstab gebogen ist, dessen Scheitel nach aussen gerichtet ist.

3. Bodenbearbeitungsgerät nach Anspruch 1, dadurch gekennzeichnet, dass die Wendel (5) aus einem Dreikantstab gebogen ist, dessen Scheitel nach aussen gerichtet ist.

4. Bodenbearbeitungsgerät nach Anspruch 1, dadurch gekennzeichnet, dass die Neigung jedes Ansatzes (6) gegenüber dem zugeordneten Radialstrahl (R) etwa 30° beträgt.

5. Bodenbearbeitungsgerät nach Anspruch 1, dadurch gekennzeichnet, dass die Ansätze (6) als im Querschnitt runde Dorne ausgebildet sind.

**Claims**

1. Soil-cultivating implement with a working tool (1) which is carried, so that it can rotate, by a supporting frame and which has, on its periphery, tooth-like projections (6) which are directed outwards and the centre axis of which is inclined relative to a radial straight line (R), transversely to the axis of revolution, in the direction of rotation of the working tool (1), characterised by a helix (5) which constitutes the working tool and is formed from a piece of extruded steel (4) and which carries the projections (6) on its outside, the turns of the helix being spaced from one another.

2. Soil-cultivating implement according to Claim 1, characterised in that the helix (5) is bent from a square bar, the apex of which is directed outwards.

3. Soil-cultivating implement according to Claim 1, characterised in that the helix (5) is bent from a triangular bar, the apex of which is directed outwards.

4. Soil-cultivating implement according to Claim 1, characterised in that the inclination of each projection (6) relative to the radial straight line (R) assigned to it is approximately 30°.

5. Soil-cultivating implement according to Claim 1, characterised in that the projections (6) are designed as spikes having around cross-section.

## Revendications

1. Instrument de labour muni d'un outil de travail (1) monté tournant sur un cadre-support, lequel outil comprend à sa périphérie des pièces ajoutées (6) en forme de dent, orientées vers l'extérieur et ayant leurs axes médians inclinés par rapport au rayon (R) transversal à l'axe de rotation de l'outil (1), caractérisé par une hélice (5) conformée en un cordon en acier (4), constituant l'outil de travail, qui supporte sur sa face externe les pièces ajoutées (6), les tours d'hélice étant écartés les uns des autres.

2. Instrument de labour conforme à la revendication 1, caractérisé en ce que l'hélice (5) est pliée en une barre à quatre pans dont le sommet est orienté vers l'extérieur.

3. Instrument de labour conforme à la revendication 1, caractérisé en ce que l'hélice (5) est pliée en barre à trois pans dont le sommet est orienté vers l'extérieur.

4. Instrument de labour conforme à la revendication 1, caractérisé en ce que l'inclinaison de chaque pièce ajoutée (6) par rapport au rayon correspondant (R) est de l'ordre de 30°.

5. Instrument de labour conforme à la revendication 1, caractérisé en ce que les pièces ajoutées (6) sont conformées comme des épines à section circulaire.

**Fig.1**

**Fig.2**

0011732

# Fig. 5